Europäisches Patentamt

European Patent Office

Office européen des brevets

(11) Publication number: **0 005 043**

A1

(19)

(12) **EUROPEAN PATENT APPLICATION**

(21) Application number: 79300627.1

(22) Date of filing: 17.04.79

(51) Int. Cl.²: **G 03 B 27/62**
**G 03 G 15/00**

(30) Priority: **17.04.78 US 896877**

(43) Date of publication of application:
**31.10.79 Bulletin 79/22**

(84) Designated Contracting States:
**DE FR GB**

(71) Applicant: **XEROX CORPORATION**
**Xerox Square - 020**
**Rochester New York 14644(US)**

(72) Inventor: **Gardner, John F.**
**900 Embury Road**
**Penfield New York 14526(US)**

(72) Inventor: **Greco, Robert L., Jr.**
**55 Wedgewood Drive**
**Penfield New York 14526(US)**

(74) Representative: **Prior, Nicholas J et al,**
**RANK XEROX LIMITED Patent Dept. Westbourne House**
**14-16 Westbourne Grove**
**London W2 5RH(GB)**

(54) An automatic document handler control system.

(57) An automatic document handler control system for use on a document copier having an exposure station (12) whereat the documents (D) to be copied are exposed by a light source.

A photocell (50) provides a control signal in response to each exposure illumination and this is used to control the operation of the document handler.

*FIG. 2*

EP 0 005 043 A1

An Automatic Document Handler Control System

This invention relates to an automatic document handler control system for use in a document copier.

Various document handlers are known by which individual documents are fed one at a time onto a platen of a copier. It is also known to copy onto continuous or web-type document material and/or to produce multiple books from continuous document material as described for example in U.S. Patent No. 3,977,780. Furthermore, it is known to provide a dual function machine for copying continuous length documents or individual documents by a single machine as described for example in U.S. Patent No. 3,804,514. In the known automatic document handlers it has been necessary physically to tie the handler to the copier in order to obtain the necessary operating relationship.

According to the present invention there is provided an automatic document handler control system for use on a document copier having an exposure station (12) whereat the documents (D) to be copied are exposed by a light source (18) characterized by exposure sensing means (50) adapted to provide a control signal in response to each exposure illumination, and means (57, 58, 59), responsive to said signal, for controlling the operation of the automatic document handler (38).

An advantage of the present invention is that the document handler does not need to be connected to the host copier in order to operate thus permitting its ready mounting and demounting. Further, it may be applied to fanfold document handlers.

One way of carrying out the invention is described in detail below with reference to drawings which illustrate only one specific embodiment, in which:

Fig. 1 is a perspective view of a duplicating machine incorporating a document handler and control system therefor according to the present invention;

Fig. 2 is a scrap side view of the apparatus, partly sectioned; and

Fig. 3 is an electrical/logic schematic illustration of the control system.

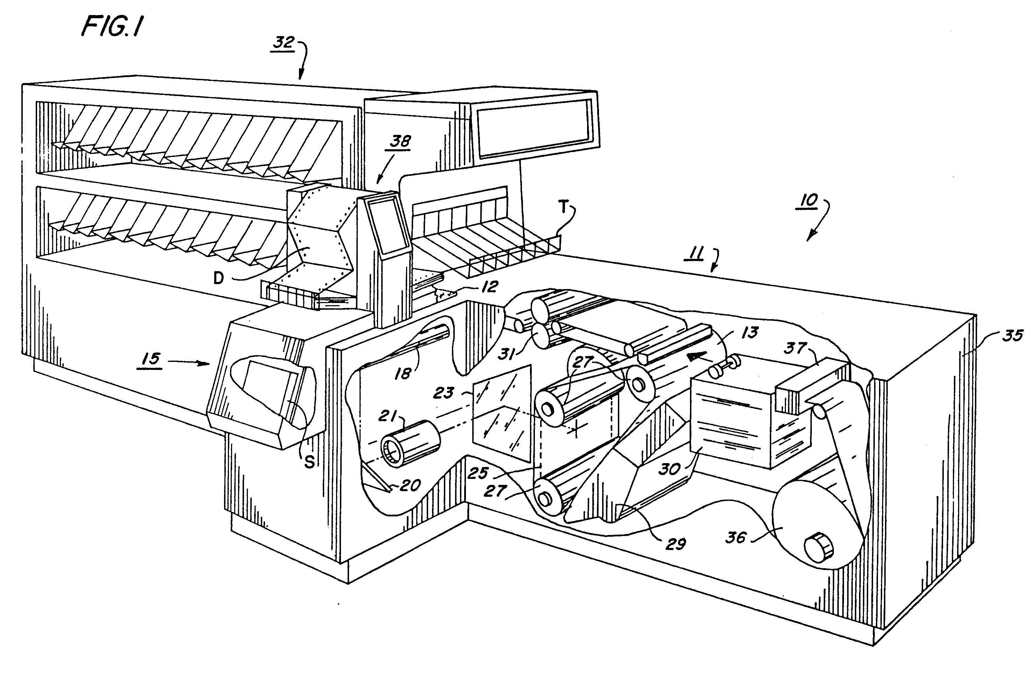

For a general understanding of a reproduction apparatus (document copier) with which the present invention may be incorporated, reference is made to Fig. 1 wherein various components of a typical electrostatographic printer system are illustrated. The printer system is of the xerographic type and is generally designated with the reference numeral 10. As in all xerographic systems, a light image of an original to be reproduced is projected onto the sensitized surface of a xerographic plate to form an electrostatic latent image. Thereafter, the latent image is developed with toner material to form a xerographic powder image corresponding to the latent image on the plate surface. The powder image is then electrostatically transferred to a record material such as a sheet or web of paper or the like to which it may be fused by a fusing device whereby the powder image is caused permanently to adhere to the surface of the record material.

The xerographic processor indicated by the reference numeral 11 is arranged as a self-contained unit having all of its processing stations located in a unitary enclosure or cabinet. The printer system includes an exposure station at which a document to be reproduced is positioned on a glass platen 12 for projection onto a photoconductive surface in the form of a xerographic belt 13. The document is transported by a recirculating document feed apparatus 15 including a belt B from the bottom of a stack S to the platen for exposure and then returned on completion of the exposure until the entire stack has been copied at which time the cycle may be repeated as described in U.S. Patent 3,944,204 entitled "Automatic Document Handler" and commonly assigned with the present invention.

Imaging light rays from the document which is flash illuminated by lamps 18 are projected by first mirror 20 and a projection lens 21 and another mirror 23 onto the xerographic belt 13 at the focal plane for the lens 21 at a position indicated by the dotted lines 25.

The xerographic belt 13 is mounted for movement around three parallel arranged rollers 27 suitably mounted in the frame of processor 11. The belt is continuously driven by a suitable motor (not shown) and at an appropriate speed. The exposure of the belt to the imaging light rays from the document discharges the photoconductive layer in the area struck by light whereby there remains on the belt an electrostatic latent image corresponding to the light image projected from the document. As the belt continues its movement, the electrostatic latent image passes a developing station at which there is positioned a developer apparatus 29 for developing the electrostatic latent image. After development, the powdered image is moved to an image transfer station whereat record material or sheet of paper just previously separated from a stack of sheets 30 is held against the surface of the belt to receive the developed powder image therefrom. The sheet is moved in synchronism with the movement of the belt during transfer of the developed image. After transfer, the sheet of paper is conveyed to a fusing station where a fuser device 31 is positioned to receive the sheet of paper for fusing the powder thereon. After fusing, the sheet is transported to a tray T, sorter 32, or finisher, or the like. It will be appreciated that the printer system may be operated in conjunction with a roll converter unit 35 to convert large roll 36 into sheet by means of cutter device 37.

Further details of the processing devices and stations in the printer system are not necessary to understand the principles of the present invention. However, a detailed description of these processing stations and components along with the other structures of the machine printer are disclosed in U.S. Patents 3,661,452 and 3,597,071.

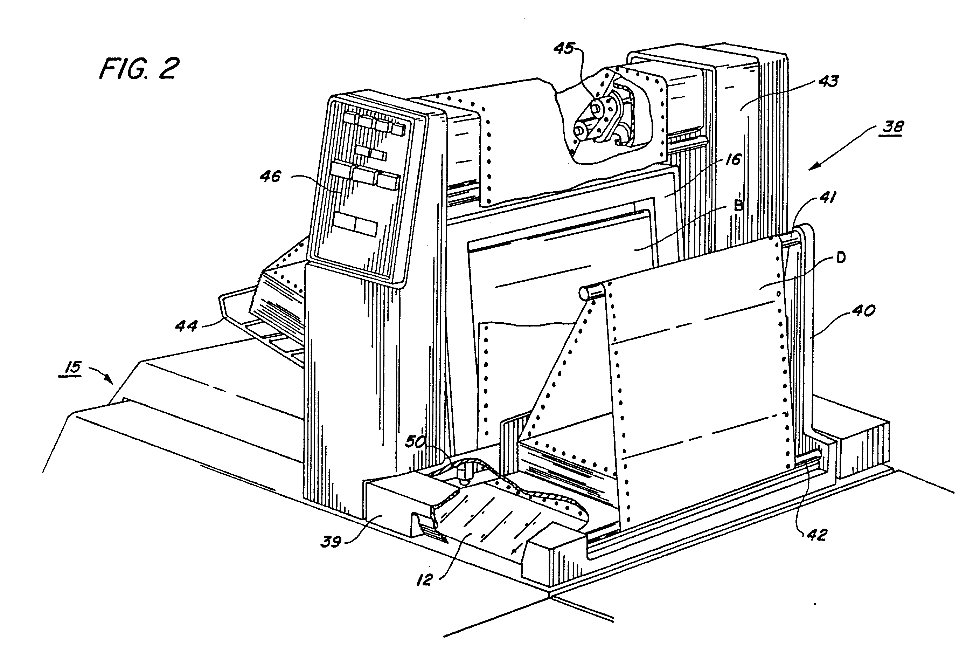

The electrostatographic duplicating machine is capable of copying continuous document material by making relatively simple adjustments without delay. Referring now to Fig. 2, there is shown a continuous document material handling apparatus 38 comprising easily detachable modules adapted to be mounted relative to the conventional automatic document apparatus 15 without any structural or electrical modifications. The apparatus 38 includes an input material device 39 containing a supply of fanfold material D. The input document apparatus 39 rests upon the platen 12 when the cover 16 of the document handler 15 is pivoted to a vertical position to expose the platen, and includes upwardly extending member 40 formed with an arcuate portion 41 around which the fanfold material D can be positioned from the top of the stack. Also formed in the input apparatus 39 is a channel 42 through which the fanfold material is threaded to condition it in overlying relationship to the platen 12. It will be appreciated that platen 12 is available as a surface in which to position the apparatus 39 when the document belt B and the cover 16 of the automatic document apparatus 15 is pivoted at right angles to the platen. The continuous document material D is advanced in a path across the platen 12, then vertically over the cover 16 by means of a U-shaped frame 43 detachably supported on the apparatus 15 then to a detachable basket 44 which collects the reproduced fanfold material. Conventional fanfold drive tractors 45 are mounted on the frame 43 and arranged cooperable with edge perforations in the fanfold material D. The feed tractors 45 are driven by a motor drive 90 to be discussed hereinafter to draw the material D across the platen 12 and onto a receiving basket 44. A control console 46 mounted on the frame 43 serves to provide operator interface to a control system to be described below.

The control system for the present invention is devised so that actuation of the computer fanfold material feed apparatus 38 utilizes some condition of the host xerographic machine processor which signifies the production of each copy during a reproduction run with the processor. It is preferred that the machine condition to be so utilized for initiation of operation of the fanfold feed apparatus be such that no internal connection or alteration of the machine processor is necessary. For purposes of this invention, the ideal machine condition is in the illumination step during a production run by the machine. Since the above-described machine produces a single flash of an illumination system for each copy of a document, an arrangement is hereby described which utilizes predetermined illumination flashes for triggering or initiating actuation of the computer fanfold feed operation, thereby effecting indexing of the fanfold material.

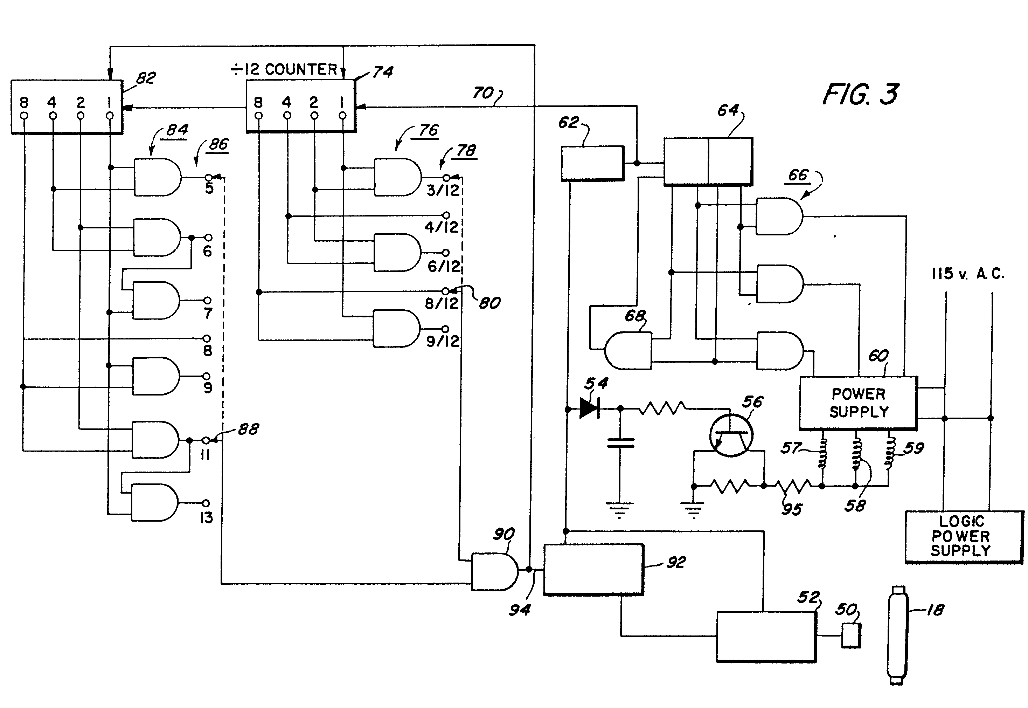

Specifically, as shown in Fig. 3, the control system includes a photocell 50 arranged adjacent the platen 12 of the machine to be energized each time that the machine illumination system 18 is energized during the production of a copy. The

0005043

photocell 50 is connected electrically to a programmer 52 suitably mounted on the control chassis for the computer fanfold apparatus. The programmer 52 is preferably a copy count setting device common in the marketplace today which is utilized by an operator for setting the desired number of copies to be produced from each page of computer fanfold. Generally these copy count programmers are arranged so that the counter counts up or down a numerical digit as each copy is produced. When the produced copies equals the number of copies preset in the programmer, a coincidence signal is derived which is generally utilized to commence machine shutdown. These programmers may be found in commercial machines for example, the 2400 Duplicator, the 3600 Duplicator, the 7000 Duplicator, and the 9200 Duplicator presently being marketed by the Xerox Corporation. For detailed descriptions of a programmer of this type, reference is made to U.S. Patent No. 3,512,885.

As the photocell 50 is energized for each or a predetermined number of flashes for illuminating the document on the platen 12, the programmer 52 counts up and in so doing produces a signal which under certain circumstances as will be described hereinafter is conveyed by way of a diode 54 to the base of a control transistor 56 thereby effecting conduction therethrough. Conduction through the transistor 56 permits full power operation of a stepper motor for driving the tractors 45 for effecting indexing thereof and movement of the fanfold material D across the platen for a subsequent illumination of the next document sheet of the fanfold material. The stepper motor is shown in Fig. 3 in the form of three stepper motor windings 57, 58 and 59. These windings are connected to a power supply 60 for energization thereof when the supply itself is energized. This energization of the power supply is produced by a system including an oscillator 62 which is arranged to be energized for producing continuous pulses by the signal generated in the programmer 52 upon energization of the photocell 50. In other words, the same pulse emanating from the programmer 52 for controlling conduction of the transistor 56 is also utilized to initiate and enable oscillation or pulse generation of the oscillator 62. Pulses from the oscillator 62 are directed to flip-flops 64 which are utilized as a counter. Signals from the flip-flops are decoded by an arrangement of decoders 66 which in turn effect energization of the power supply 60. A reset gate 68 is arranged to reset the flip flops 64 after every three pulses which is indicative of the number of coils in the stepper motor. Every succession of three pulses derived from the decoder 66 in turn effects energization in succession of the stepper motor windings 57, 58 and 59, respectively. From this it will be apparent that for a particular energization of the photocell 50, the stepper motor will be energized for a specific number of pules or rotational steps which may be suitably arranged to correspond with movement of the fanfold material from one document sheet therein to the next.

The pulses generated from the oscillator 62 are also directed by a conductor 70 to a circuit arrangement for permitting selection of the desired amount of material indexing in accordance with the dimensional size of each document sheet being copied on the material, and control of the stepper motor in accordance therewith. As shown in Fig. 3, the conductor 70 is fed into a logic device 74 which is arranged to produce eventually a control signal in accordance with a predetermined fraction of an inch movement of the fanfold material. Specifically, the logic 74 is arranged to divide an inch of distance into twelve steps, specifically the fractions: $\frac{1}{4}$, $\frac{1}{3}$, $\frac{1}{2}$, $\frac{2}{3}$ and $\frac{3}{4}$ by combining the numerically designated terminals indicated as: 1, 2, 4, 8. These terminals are connected to the input side of an array of AND gates 76 such that the output terminals 78 of the gates numerically correspond to the fractions of an inch arranged in the logic 74. In other words, the numerical designations on the terminals 78 correspond to a specific number of 1/12 inch increments and may be arranged in this manner: terminal 3 corresponds to $\frac{1}{4}$ inch, 4 to $\frac{1}{3}$ inch, 6 to $\frac{1}{2}$ inch, 8 to $\frac{2}{3}$ inch and 9 to $\frac{3}{4}$ inch. A manually operable selector switch 80 is provided and is adapted to be moved to any one of the terminals 78 in accordance with the fraction of an inch associated with each fanfold sheet.

The signal on the conductor 70 is also directed to a second logic device 82 which produces a control signal indicative of full inches of movement of the fanfold material. This device is arranged to operate for each 12 inches of material movement by combining the numerically designated terminals indicated as: 1, 2, 4, 8. The terminals are connected to the input side of an array of AND gates 84, such that the output terminals 86 of the gates numerically correspond to the full inch arranged in the logic 82. In other words, the numerical designations illustrated on the terminals 86 correspond to full inches of fanfold sheet size and the distance of movement, the sheet must be moved in whole inches for indexings across the platen. A manually operable selector switch 88 is provided and is adapted to be moved to any one of the terminals 86 in accordance with the size of a fanfold sheet. The outputs of the fraction selector switch 80 and the inch selector switch 88 are arranged as inputs to AND gate 90 such that its output represents completion of the selected number of rotational index steps of the stepper motor. In operation of the fanfold sheet size and indexing movement arrangement the operator determines the size of each sheet for the particular fanfold material to be reproduced. As an example, assume such size of the sheet is $8\frac{1}{2}$ inches, or a particular sheet is 8 inches and it is desired to add $\frac{1}{2}$ inch between sheets for spacing purposes. The operator first manipulates the selector switch 88 to the corresponding terminal which in this case is designated by numeral 8

0005043

because of the 8 inches distance of movement. The operator next manipulates the switch 80 to the terminal designated by the numeral 6 which is indicative of $\frac{1}{2}$ inch of movement. The total effect then of this operation is to effect indexing of the stepper motor having the coils 57, 58 and 59 until the fanfold material has moved across the platen a distance of $8\frac{1}{2}$ inches.

The output of AND gate 90 is electrically connected to a flip-flop arrangement 92, and serves to reset the flip-flop output to its initial off condition at the completion of each document index cycle. Flip-flop 92 also receives a signal from programmer 52 by way of conductor 94, the signal being indicative that the required number of copies as selected via programmer 52 have been produced by the host machine.

In operation, photocell 50 senses flashes from the illumination system and sends a signal to programmer 52. Programmer 52 counts the flash signals, giving no output until the number of flashes coincides with the number of copies set in the programmer. When such coincidence occurs, the programmer outputs a pulse to flip-flop 92, turning its output on, enabling operation of the oscillator 62 and also allowing conduction of transistor 56 which provides full power energization of the selected motor coils (57, 58, 59). Pulses from oscillator 62 continue causing the stepper motor to rotate until their number satisfies the index length set into selector switches 80 and 88. When the selected index has been accomplished, an output is generated from AND gate 90 which resets flip-flop 92. The flip-flop in turn disables oscillator 62, stopping the stepper motor and stopping conduction of transistor 56. Current continues to flow through the last selected coil (57, 58 or 59) but at a lower value due to the impedance offered by resistor 95. This holding current keeps the stepper motor locked in position between index cycles.

From the foregoing it will be appreciated that the automatic document handling means in the form of a computer fanfold feeding apparatus is adapted to permit the production of one or more copies of each fanfold document sheet in accordance with a presettable programmer. It would also be appreciated that the computer fanfold material feeding apparatus and control therefor may be applied and removed from a host reproduction machine without necessitating any connection, mechanical or electrical, relative to the host machine. The only necessary requirements for the host machine operator is the need to have the host machine in an operable condition and have its own programmer preset to the total number of copies to be made; that is, the number of copies for each fanfold document sheet times the number of document sheets to be produced. When the host machine has accomplished the total number of copies to be made, it may be shut down automatically which in turn effects the shut down of the computer fanfold material handling apparatus.

While the operative connection between the host machine and the document handling apparatus has been described in relation to illumination flashes from the host machine, it will be appreciated that the present invention may also be applicable to a scanning illumination system. In this latter situation, the photocell 50 may be arranged to produce its operative signal before, during or after some specific element of the scanning motion of the host machine when lamps are energized. As still another alternative, the photocell 50 may be replaced by other forms of transducers which are adapted to produce a signal indicative of activation of the host machine in response to the production of each single sheet. For example, a transducer may be arranged exteri of the host machine to sense movement of each copy sheet ɪrom a sheet feed mechanism in the machine, or to sense the energization of any other operative device or step for each copy reproduction.

- 1 -

0005043

Claims:

1.     An automatic document handler control system for use on a document copier having an exposure station (12) whereat the documents (D) to be copied are exposed by a light source (18) characterised by exposure sensing means (50) adapted to provide a control signal in response to each exposure illumination, and means (57, 58, 59),responsive to said signal, for controlling the operation of the automatic document handler (38).

2.     A control system according to Claim 1 in which said exposure sensing means (50) comprises a photodetector mounted in the document handler (38) in a position to detect the light from the exposure illumination.

3.     A control system according to Claim 1 or 2 in which said control system includes a device (74) for producing a predetermined incremental movement of a document by the document handler (38) in response to a said control signal.

4.     A control system in accordance with Claim 1 in a document copying machine adapted to handle document material (D) in a fanfold form, the copying machine including a platen (12) on which the portion of the fanfold material (D) being copied rests during copying and a light source (18) for effecting imaging of each portion of the fanfold material (D), characterised in that said machine includes means (42) for guiding the fanfold material (D) across the platen (12), and drive means (45) operable upon the material (D) when energized for effecting incremental index movement of the material, and said control means (57, 58, 59) is selectively responsive to successive activations of the light source (18) or multiples thereof of the machine during an operation run, and is operatively connected to the drive means (45) for energizing the same corresponding for each of said activations or multiples thereof for producing successive index movements of the material (D).

FIG.1

1/3

0005043

*FIG. 2*

**FIG. 3**

115 v. A.C.

LOGIC POWER SUPPLY

POWER SUPPLY

÷12 COUNTER

3/12  4/12  6/12  8/12  9/12

5  6  7  8  9  11  13

## DOCUMENTS CONSIDERED TO BE RELEVANT

| Category | Citation of document with indication, where appropriate, of relevant passages | Relevant to claim |
|---|---|---|
| | US - A - 3 586 437 (STROMBERG DATAGRAPHIX) <br> * claim 1; fig. 1 * <br> --- | 1 |
| | DE - A - 2 235 384 (XEROX) <br> * claim 1; page 16; fig. 3 * <br> -- | 1 |
| | DE - A - 2 619 447 (RANK XEROX) <br> * claims 11 to 18; fig. 5 * <br> -- | 1,4 |
| A | DE - A - 2 600 933 (MINOLTA CAMERA) <br> * claim 1 * <br> ---- | |

**CLASSIFICATION OF THE APPLICATION (Int. Cl.²)**

G 03 B 27/62
G 03 G 15/00

**TECHNICAL FIELDS SEARCHED (Int.Cl.²)**

G 03 B 27/00
G 03 G 15/00
G 03 G 21/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 09-07-1979 | HOPPE |

EPO Form 1503.1    06.78